# EUROPÄISCHE PATENTSCHRIFT

(11) **EP 0 900 677 B1**
(45) Veröffentlichungstag und Bekanntmachung des Hinweises auf die Patenterteilung: **05.03.2003**
(21) Anmeldenummer: 98116609.3
(22) Anmeldetag: 02.09.1998
(51) Int. Cl.: B60G 21/04

(54) **Lagerung eines Stabilisators an einem Kraftfahrzeug**
Bracket for a stabilizer on a motor vehicle
Palier de stabilisateur sur un véhicule à moteur

(30) Priorität: 04.09.1997 DE 19738769
(43) Veröffentlichungstag der Anmeldung: 10.03.1999
(73) Patentinhaber: Bayerische Motoren Werke Aktiengesellschaft, 80788 München (DE)
(72) Erfinder: Höflschweiger, Erwin, 83059 Kolbermoor (DE)

(56) Entgegenhaltungen:
- EP-A1- 0 227 869
- EP-A1- 0 770 506
- WO-A1-94/13967
- FR-A1- 2 480 683

## Beschreibung

Die Erfindung betrifft die Lagerung eines Stabilisators an einem Kraftfahrzeug gemäß dem Oberbegriff des Anspruchs 1.

Es ist bereits bekannt, Lagerbüchsen, zum Beispiel zum Lagern von Stabilisatoren, so auszubilden, dass diese aus einem Gehäuse bestehen, in dem verdrehbar über eine Kunststoffbüchse eine Nabe gehalten wird. Solche Lagerbüchsen sind in der WO 94/13967 beschrieben. Nabe und Kunststoffbüchse können dabei formschlüssig miteinander in Eingriff stehen. Zur Befestigung des Stabilisators in der Nabe zeigen die meisten Figuren eine Nabe mit zentrischer, kegelstumpfförmiger Durchgangsbohrung, was darauf hindeutet, dass ein Presssitz zwischen Stabilisator und Nabe vorgesehen ist.

Aus der gattungsbildenden EP-A-0 770 506 ist bereits eine Lagerung eines Stabilisators an einem Kraftfahrzeug bekannt, bei dem eine Lagerstelle eine Hülse aufweist, die an dem Stabilisator beispielsweise durch Verkleben befestigt ist. Die Hülse weist eine als Gleitlager dienende sphärische Oberfläche auf. Die sphärische Oberfläche liegt an einer der sphärischen Oberfläche der Hülse angepaßten Innenfläche eines Lagergehäuses an, das aus Kunststoff besteht. Um dieses Lagergehäuse herum ist ein weiteres Gehäuse angeordnet, das an einem Achsbauteil des Kraftfahrzeuges befestigt ist. Das bekannte Lager ist aufgrund seiner besonderen Anordnung an einem sich in Längsrichtung des Kraftfahrzeuges erstreckenden Abschnitt des Stabilisators zur Übertragung von Schwenkbewegungen um eine sich in der Querrichtung des Kraftfahrzeuges erstreckende Achse ausgelegt. Da sowohl das Lagergehäuse als auch das das Lagergehäuse umgebende Gehäuse zweiteilig aufgebaut sind, ist die Herstellung und die Montage des vorbekannten Lagers aufwändig.

Aufgabe der Erfindung ist es, eine Lagerung eines Stabilisators an einem Kraftfahrzeug zu schaffen, die einfach aufgebaut ist und trotz Abdichtung kompakt baut. Diese Aufgabe wird erfindungsgemäß durch die Merkmale des Anspruchs 1 gelöst.

Durch die Ausbildung eines Gleitlagerteils direkt an der Oberfläche eines Stabilisators ist eine Herstellung eines einteiligen Gleitlagerteils unter Vermeidung eines Montageschlitzes möglich. Eine Erhöhung der übertragbaren Axialkräfte wird dadurch erreicht, daß die Oberfläche der vorgesehenen Lagerstelle im Stabilisator so gestaltet ist, daß sich beim Spritzvorgang der aufgespritzte Kunststoff in der Oberfläche formschlüssig verankert. Durch die erfindungsgemäße Lagerung sind durch den Herstellungsvorgang direkt an der vorgesehenen Lagerstelle bei einem gleichen Außendurchmesser des Gleitlagerteils Stabilisatoren mit unterschiedlichen Durchmesser verwendbar. Entsprechend können bei gleichbleibender Außenkontur des Gleitlagerteils bei unterschiedlichen Stabilisatoren das gleiche Lagergehäuse mit den darin angeordneten Gegenlagerteilen verwendet werden. Durch die Kugelform sind Lagerverzwängungen und partiell überhöhte Gleitlagerflächen-Belastungen, bedingt durch achs- und stabilisatorseitige Bauteiltoleranzen sowie aufgrund von Wankfederungen vermeidbar. Von besonderem Vorteil ist, daß durch die integrierte Abdichtung das Lager kompakt baut. Die Dichtfläche kann je nach Verwendungszweck sich im wesentlichen radial oder axial erstrecken. Von Vorteil ist ferner, daß durch die erfindungsgemäße Lagerung neben der Übertragbarkeit von Axialkräften eine begrenzte Schwenkbewegung senkrecht zur Längsachse des Stabilisators und zusätzlich eine Drehbewegung um die Längsachse des Stabilisators möglich ist.

Ausführungsformen der Erfindung werden nachstehend anhand der Zeichnungen beispielshalber beschrieben. Dabei zeigen:
- Fig. 1: eine perspektivische Darstellung eines Stabilisators, an dessen sich in Kraftfahrzeug-Querrichtung erstreckenden Abschnitt beabstandet voneinander jeweils ein Gleitlagerteil an der dafür vorgesehenen Lagerstelle teilweise ausgebildet ist,
- Fig. 2: eine perspektivische Darstellung des in der Fig. 1 gezeigten Stabilisators mit vollständig ausgebildeten Lagern,
- Fig. 3: einen Längsschnitt durch eine in der Fig. 1 gezeigte erste Ausführungsform eines auf dem Stabilisator ausgebildeten Gleitlagerteils,
- Fig. 4: einen Längsschnitt durch ein in der Fig. 2 dargestelltes Lager,
- Fig. 5: eine perspektivische Ansicht eines Gehäuses eines in der Fig. 2 dargestellten Lagers,
- Fig. 6: einen Querschnitt durch ein in der Fig. 2 dargestelltes Lager,
- Fig. 7: einen Längsschnitt einer zweiten Ausführungsform eines auf einem Stabilisator angeordneten Lagers und
- Fig. 8: einen Längsschnitt einer dritten Ausführungsform eines auf einem Stabilisator angeordneten Lagers.

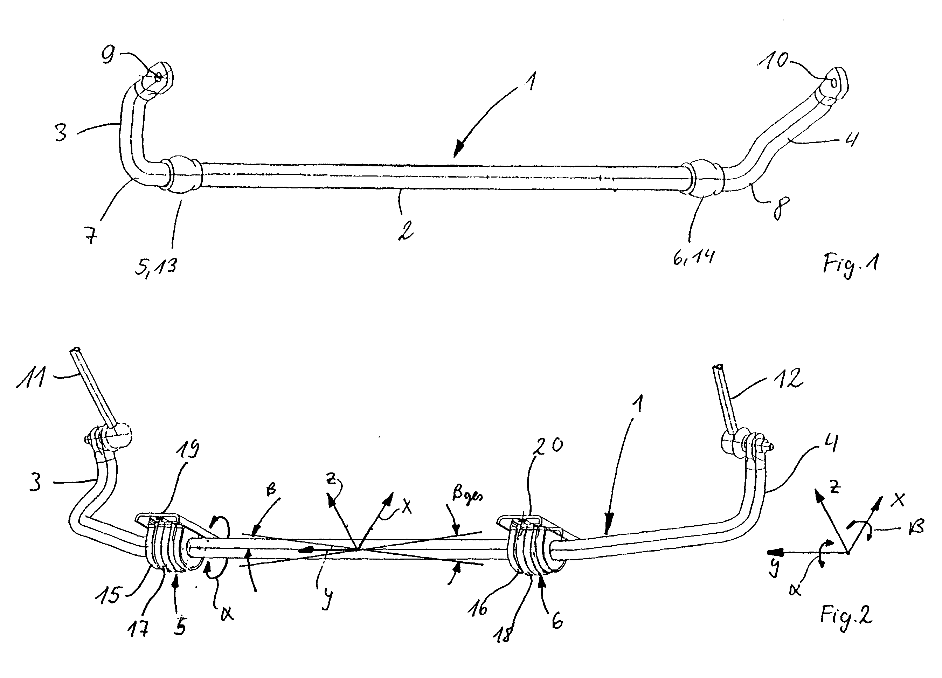

Die Fig. 1 zeigt einen Stabilisator 1 für ein nicht dargestelltes Kraftfahrzeug. Der Stabilisator 1 weist einen in etwa geradlinig verlaufenden mittleren Abschnitt 2 und zwei sich jeweils daran anschließende, unter einem Winkel verlaufende Endabschnitte 3 und 4 auf, wobei der Winkel in der Regel zwischen 70 und 110° liegt. In der gezeigten Ausführungsform sind zwei Gleitlagerteile 13, 14 von zwei Lagern 5, 6 an den dafür vorgesehenen Lagerstellen in der Nähe des jeweiligen Überganges 7, 8 vom mittleren Abschnitt 2 auf den entsprechenden Endabschnitt 3, 4 ausgebildet. An den Endabschnitten 3 und 4 sind Durchgangsöffnungen 9, 10 zur Anbindung von in der Fig. 2 teilweise dargestellten Pendelstützen 11, 12 vorgesehen. Das jeweilige Gleitlagerteil 13, 14 besteht aus einem gleitoptimierten Kunststoff, der direkt auf den Stabilisator 1, vorzugsweise durch einen Spritzvorgang, in der in der Fig. 1 gezeigten Form aufgebracht ist.

In der Fig. 2 ist das jeweilige äußere Gehäuse 15, 16 der jeweiligen Lagerstelle 5, 6 dargestellt, das jeweils über ein schellenförmiges Befestigungsteil 17, 18 an einem Flansch 19, 20 oder dergleichen einer nicht abgebildeten Achse oder eines Teils davon angeordnet ist. Zusätzlich sind in der Fig. 2 die Freiheitsgrade α und β des Stabilisators 1 in Form von Pfeilen eingezeichnet. Durch die Lager 5, 6 mit dem jeweiligen kugelförmigen oder balligen Gleitlagerteil 13, 14 ist eine Drehbewegung α um die y-Achse möglich. Ferner erlauben die Lager 5, 6 eine begrenzte Schwenkbewegung um einen Winkel β um die x-Achse. Der Winkel β liegt für eine Schwenkbewegung in einer Richtung in einem Bereich zwischen β = 3 bis 10°, so daß der gesamte Schwenkwinkel β_{ges} = 6 bis 20° beträgt. In einer bevorzugten Ausführungsform beträgt der gesamte Schwenkwinkel β_{ges} = 12°.

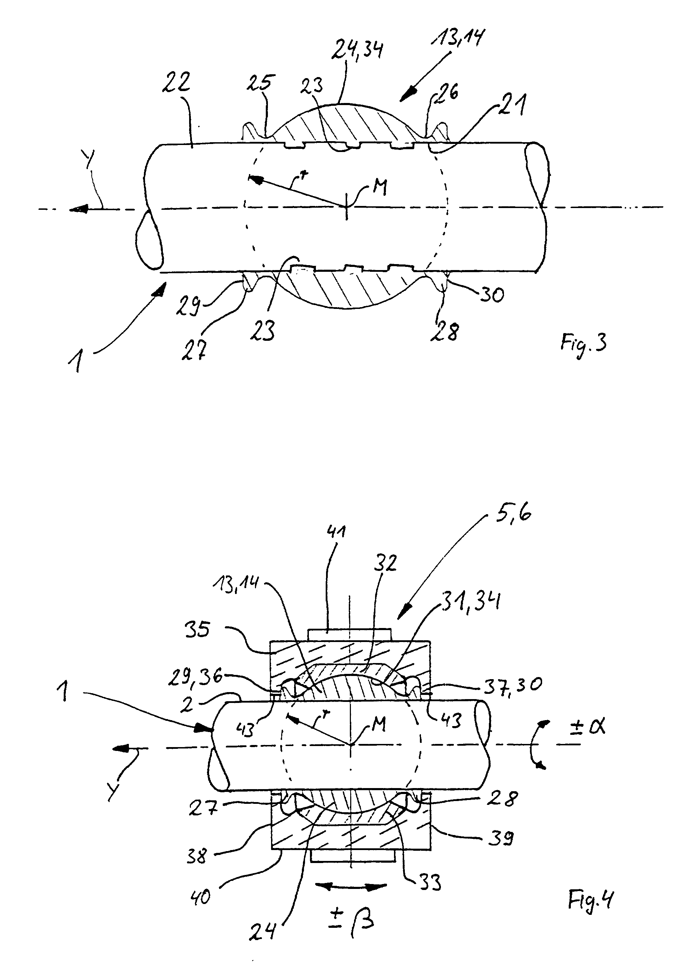

Die Fig. 3 zeigt eine vergrößerte Darstellung eines in der Fig. 1 gezeigten Gleitlagerteils 13, 14 im Längsschnitt. Das Gleitlagerteil 13, 14 weist eine Durchgangsöffnung 21 auf. Zur formschlüssigen Verbindung des aufgespritzten Kunststoffes sind in der Oberfläche 22 des Stabilisators in axialer oder y-Richtung wirkende Vertiefungen 23 ausgebildet. Durch den Formschluß können hohe Axialkräfte zwischen dem Gleitlagerteil 13, 14 und dem Stabilisator 1 übertragen werden. Für geringere Axialkraftübertragungen reicht die beim Erkalten des aufgespritzten Kunststoffes für das Gleitteil entstehende Schrumpfspannung auf der Stabilisatoroberfläche aus. Das in den Fig. 1 und 3 gezeigte Gleitlagerteil 13, 14 weist einen mittleren, kugelförmigen Abschnitt 24 zur Übertragung der auftretenden Lagerkräfte auf. An diesen kugelförmigen Abschnitt schließt sich jeweils eine umlaufende rinnenförmige Vertiefung 25, 26 und an die jeweilige Vertiefung 25, 26 einstückig ein ringförmiger Abschnitt 27, 28 an.

Wie aus der Fig. 4 hervorgeht, dient die vom mittleren Abschnitt 24 wegzeigende jeweilige Stirnfläche 29, 30 des entsprechenden Abschnittes 27, 28 als Dichtfläche, um ein Eindringen von Schmutz, Feuchtigkeit oder dergleichen zu vermeiden. Die in den Fig. 1, 3, 4, 6, 7 und 8 gezeigten Ausführungsformen weisen als gemeinsames Merkmal auf, daß der Mittelpunkt M des eine Kugel mit einem Radius r darstellenden Bereichs des jeweiligen Gleitlagerteils auf der Längsachse bzw. y-Achse des mittleren Abschnittes 2 des Stabilisators 1 liegt. Entsprechend liegt der Mittelpunkt einer Innenfläche eines jeden, den kugelförmigen Abschnitt zumindest teilweise umgebenden Gegenlagerteils an der gleichen Stelle.

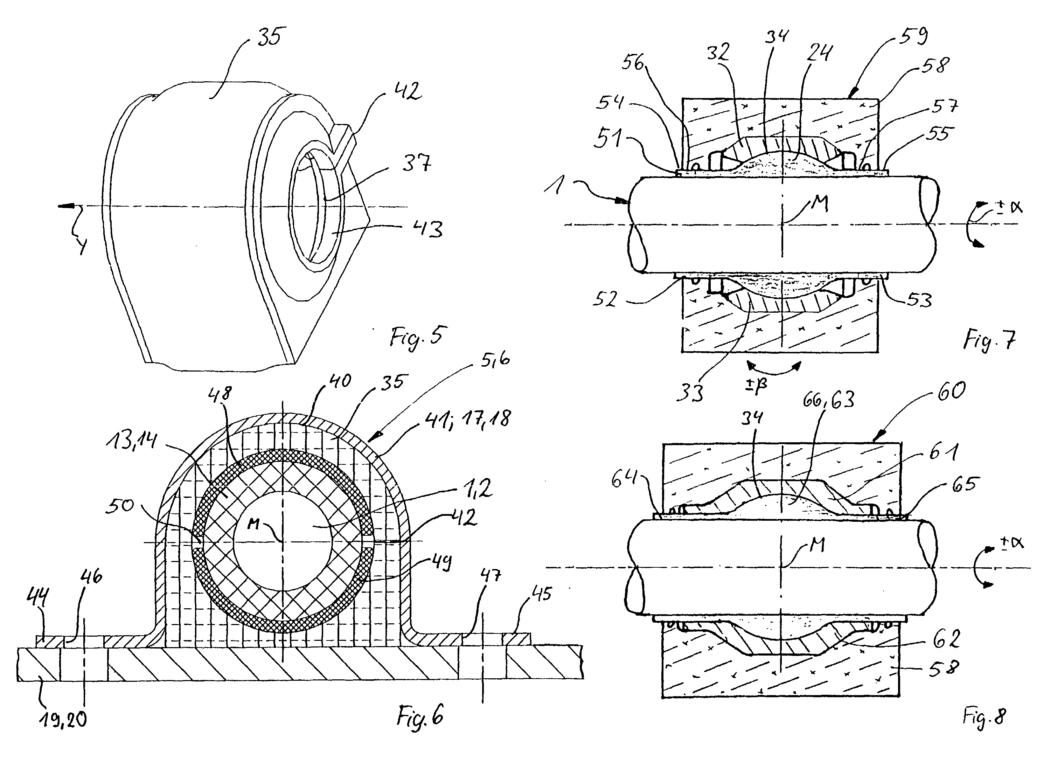

Die Fig. 4 zeigt neben dem auf dem Stabilisator 1 befestigten Gleitlagerteil 13, 14 das mindestens zweistückig ausgebildete Gegenlagerteil 32, 33, dessen sphärische oder kugelförmige Innenfläche 31 entsprechend der Außenoberfläche 34 des mittleren, kugelförmigen Abschnittes 24 angepaßt ist. Die Gegenlagerteile 32, 33 bestehen in der Regel aus einem nicht gleitmodifizierten Werkstoff, beispielsweise aus Kunststoff, aus Stahl oder aus Kunststoffschalen, in denen Stahl eingelagert ist. Als Kunststoff wird vorzugsweise Polyamid PA und/oder PPE und/oder PBT verwendet. Das Gleitlagerteil 13, 14 ist vorzugsweise ein gleitoptimierter Werkstoff, beispielsweise ein faserverstärkter Kunststoff, wobei die verwendeten Fasern vorzugsweise Kohlefasem sind. Ferner können zumindest in die Außenoberfläche 34 des Gleitlagerteils 13, 14 gleitfähige Stoffe wie Silicon, Polytetraflourethylen PTFE und/oder Molybdän enthaltende Stoffe eingelagert sein. Neben einer trockenen Lagerung kann das Lager auch mit herkömmlichen Schmierstoffen, wie z. B. Fett, geschmiert sein. Die Gegenlagerteile 32, 33 sind in einem Lagergehäuse 35 eingebettet und befestigt, wobei das Lagergehäuse 35 einen in der Fig. 5 erkennbaren Montageschlitz 42 aufweist. Das Lagergehäuse 35 besteht vorzugsweise aus einem Ethylen-Propylen-Terpolymerisat-Kautschuk oder aus einem anderen Elastomer. Das Lagergehäuse 35 liegt mit einem ringförmigen Abschnitt 36, 37 seiner jeweiligen Seitenwand 38, 39 an der entsprechenden Stirnfläche 29, 30 des jeweiligen ringförmigen Abschnittes 27, 28 des Gleitlagerteils 13, 14 zur Bildung jeweils einer Dichtfläche an. Auf der Mantelfläche 40 des Lagergehäuses 35 ist ein Befestigungsteil 41 angeordnet, dessen Form und Verlauf aus der Fig. 6 hervorgeht.

Aus den Fig. 4 und 5 ist erkennbar, daß das Lagergehäuse 35 eine dem Durchmesser des Stabilisators 1 angepaßte Durchgangsöffnung 43 aufweist. Aus der Fig. 6 geht hervor, daß das Lagergehäuse 35 und das Befestigungsteil 41 einen U-förmigen Querschnitt aufweisen, wobei das Befestigungsteil 41 zusätzlich mit seitlichen, waagrecht verlaufenden Abschnitten 44, 45 versehen ist. Das Befestigungsteil 41 entspricht den in der Fig. 2 gezeigten Befestigungsteilen 17, 18. Die Abschnitte 44, 45 des Befestigungsteils 41 sind mit Durchgangsöffnungen 46, 47 für ein nicht abgebildetes Befestigungselement, beispielsweise eine Schraube, versehen. Das Gegenlagerteil besteht in der in der Fig. 6 gezeigten Ausführungsform aus zwei halbkugelförmigen Schalen 48, 49, die in dem Lagergehäuse 35 befestigt sind. Die beiden Schalen 48, 49 sind in der Regel an ihren gegenüberstehenden Rändern einige Millimeter voneinander beabstandet. In der Trennebene 50 zwischen den beiden Schalen 48, 49 ist im Lagergehäuse 35 der Schlitz 42 ausgebildet. Das Befestigungsteil 41 bzw. 17, 18 ist an einem flanschförmigen Befestigungsteil 19, 20 angeordnet, das in der Regel zu einem Achsbauteil eines Kraftfahrzeuges gehört.

In der Fig. 7 ist eine zweite Ausführungsform einer Lagerung eines Stabilisators 1 gezeigt, bei der ein Gleitlagerteil 51 statt rillenförmiger Vertiefungen 25, 26 wie in der Ausführungsform der Fig. 1, 3 und 4 zylindrische, seitliche Abschnitte 52, 53 aufweist. Die Oberflächen 54, 55 der Abschnitte 52, 53 dienen als Dichtfläche in Verbindung mit jeweils einer dazu gegenüberliegenden Außenfläche 56, 57 eines Lagergehäuses 58. Das Lager 59 der Fig. 7 weist im übrigen die gleiche Beweglichkeit wie die Lager 5, 6 der Fig. 1 bis 6 auf.

Die Fig. 8 zeigt ein Lager 60, bei dem im Unterschied zu den vorhergehenden Gegenlagerteilen die beiden Gegenlagerteile 61, 62 neben dem mittleren, kugelförmigen Abschnitt 63 zusätzlich die beiden seitlichen Abschnitte 64, 65 des Gleitlagerteils 66 überdeckt. Dadurch wird die gleitende Schwenkbewegung um die x-Achse um den Winkel β im wesentlichen verhindert. Durch den Elastomeranteil in dem Gleitlagerteil 66 und ggf. in den Gegenlagerteilen 61, 62 ist dennoch durch eine elastische Verformung des Lagers 60 eine Schwenkbewegung β um die x-Achse möglich.

## Patentansprüche

1. Lagerung eines Stabilisators (1) an einem Kraftfahrzeug, mit einem inneren, an der Oberfläche des Stabilisators (1) angeordneten Gleitlagerteil (13, 14, 51, 66) mit balliger oder kugelförmiger Gleitlagerfläche (34), das direkt auf den Stabilisator (1) aufgebracht ist und mit mindestens zwei an dem Gleitlagerteil (13, 14, 51, 66) anliegenden Gegenlagerteilen (32, 33, 48, 49, 61, 62), die in einem Lagergehäuse (35) angeordnet sind, **dadurch gekennzeichnet, dass** das Gleitlagerteil (13, 14, 51, 66) aus einem gleitoptimierten Kunststoff besteht und seitliche Abschnitte (27, 28, 52, 53, 64, 65) aufweist, die mit gegenüberliegenden Flächen (36, 37, 56, 57) der Durchgangsöffnung (43) des Lagergehäuses (35, 58) Dichtungen bilden.

2. Lagerung nach Anspruch 1, **dadurch gekennzeichnet, dass** der aufgebrachte Kunststoff des Gleitlagerteils (13, 14, 51, 66) formschlüssig mit der Oberfläche (22) des Stabilisators (1) verbunden ist.

3. Lagerung nach einem der vorhergehenden Ansprüche, **dadurch gekennzeichnet, dass** die Gegenlagerteile (32, 33) den kugelförmigen Abschnitt (24) des Gleitlagerteils (13, 14) nur so weit umfassen, dass der Stabilisator (1) in dem Lager (5, 6, 59) um die Querachse x des Stabilisators (1) über einen Winkel β, insbesondere 6° bis 20°, schwenkbar ist.

4. Lagerung nach einem der Ansprüche 1 oder 2, **dadurch gekennzeichnet, dass** die Gegenlagerteile (61, 62) den kugelförmigen Abschnitt (63) des Gleitlagerteils (66) so weit umfassen, dass der Stabilisator (1) in dem Lager (60) in bezug auf die Querachse x gleitend unbeweglich und nur über die elastische Verformbarkeit des Lagers (60) um einen Winkel β schwenkbar ist.

5. Lagerung nach einem der vorhergehenden Ansprüche, **dadurch gekennzeichnet, dass** durch die kugelförmige Ausbildung des Lagers (5, 6, 59, 60) Axialkräfte in Richtung der Längsachse des Stabilisators (1) übertragbar sind und dass der Stabilisator (1) um seine Längsachse y um einen Winkel α verdrehbar ist.

6. Lagerung nach einem der vorhergehenden Ansprüche, **dadurch gekennzeichnet, dass** das Lagergehäuse (35, 58) über ein das Lagergehäuse (35, 58) umgreifendes Befestigungsteil (17, 18, 41) an einem Kraftfahrzeugbauteil (19, 20), insbesondere einem Achsbauteil, angeordnet ist.

## Claims

1. A bearing of a stabiliser (1) on a motor vehicle, having an inner sliding bearing member (13, 14, 51, 66) arranged on the surface of the stabiliser (1) with a spherical or ball-shaped sliding bearing surface (34), directly applied to the stabiliser (1) and having at least two counter-bearing members (32, 33, 48, 49, 61, 62) lying on the sliding bearing member (13, 14, 51, 66), said counter-bearing members being arranged in a bearing housing (35), **characterised in that** the sliding bearing member (13, 14, 51, 66) comprises a plastics material optimised for sliding properties and has lateral sections (27, 28, 52, 53, 64, 65) which form seals with opposing surfaces (36, 37, 56, 57) of the through opening (43) of the bearing housing (35, 58).

2. A bearing according to Claim 1, **characterised in that** the applied plastics material of the sliding bearing member (13, 14, 51, 66) is joined in form-fitting manner to the surface (22) of the stabiliser (1).

3. A bearing according to any one of the previous claims, **characterised in that** the counter-bearing members (32, 33) enclose the spherically shaped section (24) of the sliding bearing member (13, 14) only to the extent that the stabiliser (1) is tiltable in the bearing (5, 6, 59) about the transverse axis x of the stabiliser (1) through an angle β, particularly between 6° and 20°.

4. A bearing according to any one of the claims 1 or 2, **characterised in that** the counter-bearing members (61, 62) enclose the spherically shaped section (63) of the sliding bearing member (66) to the extent that the stabiliser (1) is incapable of sliding movement in relation to the transverse axis x and is only tiltable, due to the elastic deformability of the bearing (60), through an angle β.

5. A bearing according to any one of the previous claims, **characterised in that**, due to the spherically shaped design of the bearing (5, 6, 59, 60), axial forces in the direction of the longitudinal axis of the stabiliser (1) may be transmitted and that the stabiliser (1) is rotatable about its longitudinal axis y through an angle α.

6. A bearing according to any one of the previous claims, **characterised in that** the bearing housing (35, 58) is arranged, by means of an attachment member (17, 18, 41) enclosing the bearing housing (35, 58), on a motor vehicle component (19, 20), particularly an axle component.

## Revendications

1. Palier de stabilisateur (1) de véhicule automobile comportant une partie de palier lisse (13, 14, 51, 66) intérieure, prévue à la surface du stabilisateur (1), ayant une surface de palier lisse (34), bombée ou sphérique, appliquée directement sur le stabilisateur (1) et au moins deux parties de palier complémentaires (32, 33, 48, 49, 61, 62) appliquées contre la partie de palier lisse (13, 14, 51, 66), parties de palier complémentaires logées dans un boîtier de palier (35),
**caractérisé en ce que**
la partie de palier lisse (13, 14, 51, 66) est en une matière plastique dont les caractéristiques de glissement ont été optimisées et qui comporte latéralement des segments (27, 28, 52, 53, 64, 65) formant des joints d'étanchéité avec les surfaces opposées (36, 37, 56, 57) de l'orifice traversant (43) du boîtier de palier (35, 58).

2. Palier selon la revendication 1,
**caractérisé en ce que**
la matière plastique de la partie de palier lisse (13, 14, 51, 66), appliquée, est reliée par une liaison par la forme à la surface (22) du stabilisateur (1).

3. Palier selon l'une quelconque des revendications précédentes,
**caractérisé en ce que**
les parties de palier complémentaires (32, 33) n'entourent le segment sphérique (24) de la partie de palier lisse (13, 14) que dans une mesure telle que le stabilisateur (1) puisse pivoter dans le palier (5, 6, 59) autour de l'axe transversal x du stabilisateur (1) selon un angle β, notamment de 6° à 20°.

4. Palier selon l'une quelconque des revendications 1 ou 2,
**caractérisé en ce que**
les parties de palier opposées (61, 62) entourent le segment de forme sphérique (63) de la partie de palier complémentaire (66) dans une mesure telle que le stabilisateur (1) dans le palier (60) puisse se glisser de manière immobile par rapport à l'axe transversal x et ne pivote que d'un angle β par la déformation élastique du palier (60).

5. Palier selon l'une quelconque des revendications précédentes,
**caractérisé en ce que**
la réalisation sphérique du palier (5, 6, 59, 60) permet de transmettre les forces axiales en direction de l'axe longitudinal du stabilisateur (1) et le stabilisateur (1) peut tourner d'un angle α autour de son axe longitudinal y.

6. Palier selon l'une quelconque des revendications précédentes,
**caractérisé en ce que**
le boîtier de palier (35, 58) est monté par une pièce de fixation (17, 18, 41) entourant le boîtier de palier (35, 58) sur un composant du véhicule (19, 20), notamment une partie d'essieu.
